# EUROPÄISCHE PATENTSCHRIFT

(11) **EP 2 103 844 B1**
(45) Veröffentlichungstag und Bekanntmachung des Hinweises auf die Patenterteilung: **20.06.2012**
(21) Anmeldenummer: 09001278.2
(22) Anmeldetag: 30.01.2009
(51) Int. Cl.: F16H 57/02

(54) **Planetengetriebe, insbesondere Planetengetriebestufe in einer mehrstufigen Planetengetriebeanordnung**
Planetary gear, in particular planetary gear step in a multiple step planetary gear assembly
Engrenage planétaire, notamment étage de transmission planétaire dans un agencement d'engrenage planétaire à plusieurs étages

(30) Priorität: 20.03.2008 DE 102008015317
(43) Veröffentlichungstag der Anmeldung: 23.09.2009
(73) Patentinhaber: ZEITLAUF GmbH Antriebstechnik & Co.KG, 91207 Lauf/Pegnitz (DE)
(72) Erfinder: Federsel, Thomas, 92318 Neumarkt (DE)
(74) Vertreter: Hübner, Gerd

(56) Entgegenhaltungen:
- DE-A1- 10 325 781
- DE-A1- 19 840 968
- US-A- 3 854 349

## Beschreibung

Die Erfindung betrifft ein Planetengetriebe und insbesondere eine Planetengetriebestufe in einer mehrstufigen Planetengetriebeanordnung mit den im Oberbegriff des Patentanspruches 1 angegebenen Merkmalen.

Letztere geben im Wesentlichen den Standard-Aufbau eines Planetengetriebes oder einer entsprechenden Planetengetriebestufe an. Antriebsseitig ist ein zentrales, als Antriebswelle fungierendes, außenverzahntes Sonnenrad vorgesehen, das mit einem Planetenradsatz aus mindestens zwei, üblicherweise drei Planetenrädern in Eingriff steht. Diese sind einerseits in einem mit den um das Sonnenrad umlaufenden Plantetenrädern rotierenden Planetenradträger drehbar gelagert und stehen andererseits auch in Eingriff mit einem innenverzahnten, festen Hohlrad des Planetengetriebes, das in der Regel im Getriebegehäuse als gesondertes Teil oder eingearbeitete Innenverzahnung ausgelegt ist.

Der Planetenradträger stützt sich zumindest auf einer Längsaxialseite am Getriebegehäuse über ein Kugellager radial ab. Dies stellt neben der üblichen Lagerung der am Planetenradträger befestigten Abtriebswelle des Planetengetriebes eine zusätzliche Radiallagerung für den Planetenradträger dar, die im Vergleich zu Standard-Planetengetrieben mit nur einseitiger Lagerung des Planetenradträgers eine stabilere Abstützung des Planetenradträgers erlaubt.

Problematisch bei bisher bekannten Planetengetrieben dieser Bauart mit einer radialen Abstützung des Planetenradträgers ist zum einen die Tatsache, dass für übliche Planetengetriebe Kugellager mit großem Durchmesser verwendet werden müssen, um eine Abstützung an der Innenfläche des Getriebegehäuses zu ermöglichen. Derartige Kugellager sind oftmals nur in Sondergrößen verfügbar. Sollen kleinere Kugellager insbesondere in Standardgrößen verwendet werden, so müsste im Getriebegehäuse eine nach innen abstehende, umlaufende Ringschulter zur Aufnahme dieses Kugellagers vorhanden sein, was fertigungstechnisch äußerst aufwändig ist. Insbesondere bei mehrstufigen Planetengetriebeanordnungen verhindert eine solche Ringschulter dann, dass ein einteiliges, alle Getriebestufen aufnehmendes Getriebegehäuse verwendet werden kann, da die Ringschulter eine sequentielle Montage der einzelnen Getriebestufen verhindert.

Die DE 19840968A1, die die Merkmale des Oberbegriffs des Anspruchs 1 enthält, offenbart ein Planetengetriebe der vorstehend erör-terten Art, das zudem einen separaten Lagersitzring zwischen Kugellager und Getriebegehäuse aufweist. Aufgrund des Lagersitzringes können kleinere Kugellager verwendet werden, die in der Regel als Standardkugellager verfügbar sind. Damit kann ein Planetengetriebe wirtschaftlicher hergestellt werden.

Ausgehend von den geschilderten Nachteilen des Standes der Technik liegt der Erfindung die Aufgabe zugrunde, ein Planetengetriebe der gattungsgemäßen Art so zu verbessern, dass bei optimiertem Lagerverhalten eine konstruktive Vereinfachung für das Planetengetriebe erzielbar ist.

Diese Aufgabe wird laut Kennzeichnungsteil des Patentanspruches 1 dadurch gelöst, dass der Lagersitzring mit seinem Außendurchmesser auf dem Kopfkreis der Innenverzahnung am Getriebegehäuse für das Hohlrad eingesetzt ist. Damit kann der separate Lagersitzring in seinem Außendurchmesser an den Verzahnungskopfkreis der jeweiligen Innenverzahnung für das Hohlrad des Planetengetriebes angepasst werden. Dement-sprechend kann das Getriebegehäuse einteilig und alle Getriebestufen aufnehmend ausgebildet sein. Durch die einteilige Ausführung des Gehäuses wird auch eine höhere Fertigungsgenauigkeit bei mehrstufigen Planetengetriebeanordnungen erreicht. Gemäß einer bevorzugten Ausführungsform ist der Lagersitzring aus einem Kunststoffmaterial gefertigt. Durch diese Auslegung des Lagersitzringes wird eine zusätzliche Dämpfung der Lagerung des Planetenradträgers erzielt, da das Kunststoffmaterial des Lagersitzringes gegenüber beispielsweise einer aus dem Metallmaterial des Getriebegehäuses "aus dem Vollen" herausgearbeiteten Abstützung einen geringeren E-Modul aufweist. Auch ist die Geräuschentwicklung des Getriebes durch die erfindungsgemäße Abstützung des Planetenradträgers im Wesentlichen unabhängig von der auf die Getriebeanordnung wirkenden Radiallast.

Eine weitere bevorzugte Ausführungsform der Erfindung sieht die Montage des Außenrings des Kugellagers in dem Lagersitzring durch Einschnappen in eine in der Innenfläche des Ringes umlaufende, flache Hinterschneidung vor. Damit ist eine sichere Verbindung zwischen dem Kugellager und dem Lagersitzring gewährleistet.

Weitere Merkmale, Einzelheiten und Vorteile der Erfindung ergeben sich aus der nachfolgenden Beschreibung, in der ein Ausführungsbeispiel des Erfindungsgegenstandes anhand der beigefügten Zeichnungen näher erläutert wird. Es zeigen:
- Fig. 1: einen Längsaxialschnitt eines Getriebemotors mit zweistufigem Pla- netengetriebe,
- Fig. 2: eine perspektivische, in einer Radialebene weggebrochene Ansicht des Getriebemotors gemäß Fig. 1, und
- Fig. 3: einen vergrößerten Detailschnitt der Einzelheit III gemäß Fig. 1.

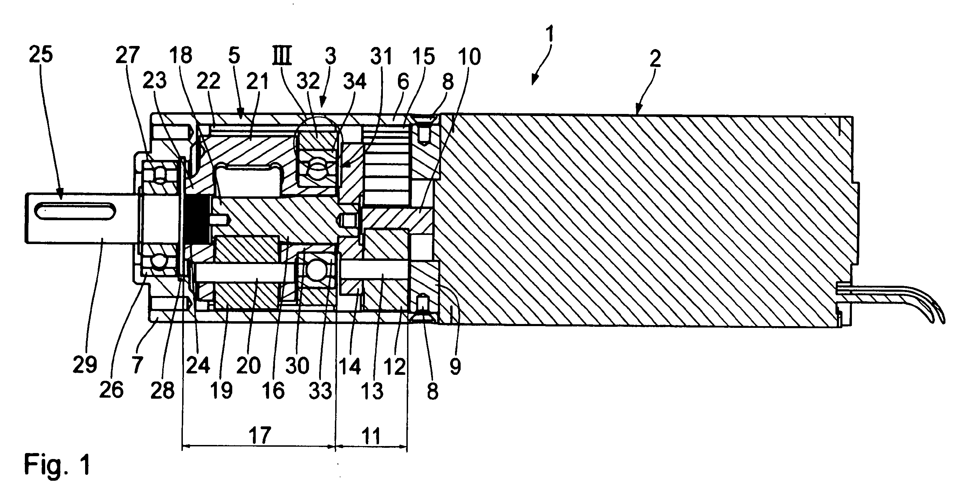

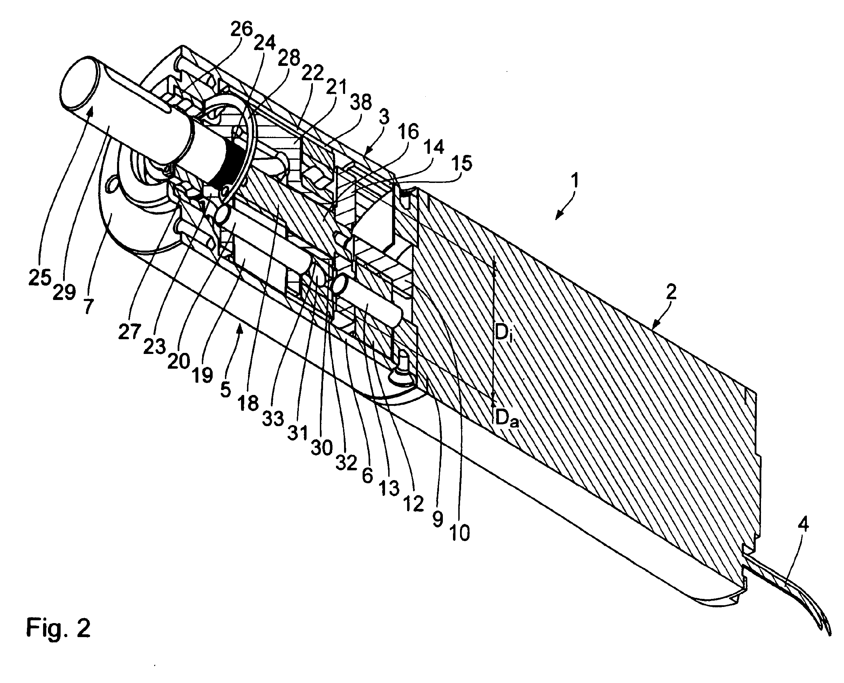

Wie aus Fig. 1 und 2 deutlich wird, weist ein als Ganzes mit 1 bezeichneter Getriebemotor eine höchst schematisch dargestellte Elektromotoreinheit 2 und eine davor gesetzte zweistufige Getriebeanordnung 3 auf. Die Elektromotoreinheit 2 wird über Anschlussleitungen 4 mit Energie versorgt.

Der gesamte Getriebemotor 1 weist eine im Wesentlichen zylindrische Außengestalt auf, das nicht näher dargestellte Gehäuse der Elektromotoreinheit 2 und das Getriebegehäuse 5 weisen dementsprechend einen identischen Außendurchmesser auf. Das Getriebegehäuse 5 ist dabei becherartig mit einer mantelförmigen Wand 6 und einem einstückig damit ausgebildeten Bodenteil 7 ausgebildet. Es ist mit seiner offenen Seite an die Elektromotoreinheit 2 angesetzt und durch radial eingesetzte Befestigungsschrauben 8 an einem Ringflansch 9 der Elektromotor 2 befestigt.

Das Ritzel der Elektromotoreinheit 2 dient als Antriebswelle für die Planetengetriebeanordnung 3 und stellt das außen verzahnte Sonnenrad 10 der ersten Getriebestufe 11 dar. Dieses Sonnenrad 10 steht mit drei Planetenrädern 12 in Eingriff, die in gleichmäßigen Winkelabständen um das Sonnenrad 10 gruppiert und einseitig auf Lagerachsstummeln 13 in dem Planetenradträger 14 drehbar gelagert sind. Ferner stehen die Planetenräder 12 mit dem feststehenden Hohlrad 15 der ersten Getriebestufe 11 in Eingriff, das durch eine peripher umlaufende Innenverzahnung an der Wand 6 des Getriebegehäuses 5 gebildet ist.

Der Planetenradträger 14 der ersten Getriebestufe 11 ist mit einer konzentrischen Abtriebswelle 16 versehen, die in axialer Richtung verlängert in die zweite Getriebestufe 17 führt und mit einer Außenverzahnung dort das Sonnenrad 18 dieser zweiten Getriebestufe 17 bildet.

Dieses Sonnenrad 18 steht analog der ersten Getriebestufe 11 mit einem weiteren Satz von Planetenrädern 19 in Eingriff, die über Lagerachsen 20 beidseitig in einem käfigartigen Planetenradträger 21 drehbar gelagert sind. Gleichzeitig stehen die Planetenräder 19 der zweiten Getriebestufe 17 wiederum mit einem äußeren, feststehenden Hohlrad 22 in Eingriff, das durch eine weitere Innenverzahnung an der Wand 6 des Getriebegehäuses 5 gebildet ist.

Der Planetenradträger 21 der zweiten Getriebestufe 17 ist auf seiner der ersten Getriebestufe 11 abgewandten Seite mit seinem abtriebsseitigen Lagerflansch 23 drehfest mit dem Koppelende 24 der als Ganzes mit 25 bezeichneten Abtriebswelle der Planetengetriebeanordnung 3 verbunden. Letztere ist über ein Kugellager 26 in einem Lagersitz 27 im Bodenteil 7 des Getriebegehäuses 5 drehgelagert. Durch einen darin sitzenden Anschlagring 28 ist der Planetenradträger 21 in Richtung zur Abtriebswelle 25 hin axial abgestützt. An das durch das Kugellager 26 hinausstehende Ende 29 der Abtriebswelle 25 wird ein vom Getriebemotor 1 anzutreibendes Gerät angekoppelt.

Auf der der ersten Getriebestufe 11 zugewandten Längsaxialseite ist der Planetenradträger 21 der zweiten Getriebestufe 17 mit einer konzentrisch umlaufenden Lagerschulter 30 versehen, die in einem Kugellager 31 zwischen den Planetenradträgern 14, 21 der ersten und zweiten Getriebestufe 11, 17 drehbar gelagert ist. Zwischen diesem Kugellager 31 und dem Getriebegehäuse 5 ist dabei ein separater Lagersitzring 32 aus einem Kunststoffmaterial, wie beispielsweise einem Polyacetal-Homopolymer (POM-H) vorgesehen. Es handelt sich um einen festen Kunststoff mit guten Gleit-, Reib- und Zerspanungseigenschaften, dessen typische Anwendungsfälle Kunststoffzahnräder umfassen. Zug- und Biege-Modul liegen z.B. in der Größenordnung von 2500 bis 3500 Mpa, seine Härte bei einem Wert von 170 nach DIN 53 456. Der Innenring 33 sitzt passgenau auf der Lagerschulter 30 des Planetenradträgers 21, der Außenring 34 ist in den Lagersitzring 32 in noch näher zu erläuternder Weise eingesetzt. Der Lagersitzring 32 wiederum stützt sich an dem Kopfkreis der Innenverzahnung 38 des Hohlrades 22 ab.

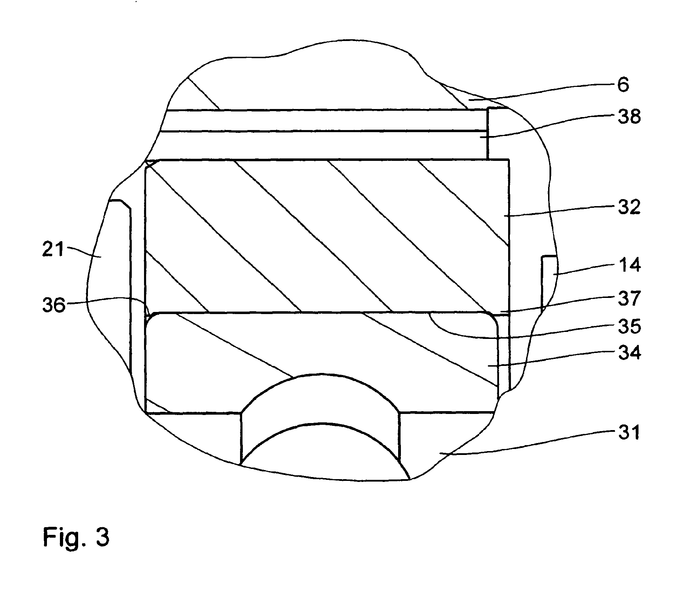

Wie aus Fig. 3 deutlich wird, ist in der Innenfläche des Lagersitzringes 32 eine umlaufende, flache Hinterschneidung 35 vorgesehen, die dementsprechend in axialer Richtung von zwei peripher umlaufenden Ringstegen 36, 37 begrenzt ist. In diese Hinterschneidung 35 ist der Außenring 34 des Kugellagers 31 eingeschnappt, sodass die beiden Ringstege 36, 37 das Kugellager 31 in axialer Richtung festlegen.

Aufgrund des separaten Lagersitzringes 32 können unabhängig von der Baugröße des Getriebemotors für das Kugellager 31 Standardtypen verwendet werden. Dazu muss lediglich der Innendurchmesser Di des Lagersitzringes 32 einem Standard-Außendurchmesser Da für das Kugellager 31 entsprechen. Ferner kann dadurch auch eine mehrstufige Planetengetriebeanordnung, wie sie beispielsweise in Fig. 1 und 2 gezeigt ist, mit einem einteiligen, alle Getriebestufen 11, 17 aufnehmenden Getriebegehäuse 5 versehen werden. In konstruktiv einfacher Weise genügt es dabei, eine für alle Getriebestufen 11, 17 einheitliche Innenverzahnung 38 an der Wand 6 des Getriebegehäuses 5 vorzusehen, die sowohl die Hohlräder 15, 22 für die beiden Getriebestufen 11, 17 als auch die Verzahnung zur stabilen Halterung des Lagersitzringes 32 bildet.

Dementsprechend stellt sich auch die Montage der Planetengetriebeanordnung 3 fertigungstechnisch einfach dar, was kurz wie folgt zum umreißen ist:

In das becherartige Getriebegehäuse 5 wird das Kugellager 26 und der Sicherungsring 28 eingesetzt. In das so vormontierte Getriebegehäuse 5 wird dann der Planetenradträger 21 mit Abtriebswelle 25 eingepresst, wobei gleichzeitig die vormontierten Planetenräder 19 mit dem Hohlrad 22 in Eingriff gebracht werden. Ebenso wird der vormontierte Lagersitzring 32 mit den Kugellager 31 auf den Kopfkreis der Innenverzahnung 38 gefügt. Zuvor wird der Lagersitzring 32 in die Lagerschulter des Außenringes des Kugellagers 31 eingeschnappt und auf den Planetenträger aufgepresst. Anschließend wird die erste Getriebestufe 11 mit der das Sonnenrad 18 der zweiten Getriebestufe 17 bildenden Abtriebswelle 16 in vormontiertem Zustand in das Getriebegehäuse 5 eingesetzt, wodurch die Planetenräder 12 der ersten Getriebestufe mit dem Hohlrad 15 in Eingriff gelangen. Die so montierte Planetengetriebeanordnung 3 wird unter Eingriff des Sonnenrades 10 in Form des Ritzels der Elektromotoreinheit 3 auf den Ringflansch 9 der Elektromotoreinheit 2 aufgesetzt und mit Hilfe der Befestigungsschrauben 8 festgelegt.

## Patentansprüche

1. Planetengetriebe, insbesondere Planetengetriebestufe in einer mehrstufigen Planetengetriebeanordnung, umfassend
- ein als Antriebswelle fungierendes, außenverzahntes Sonnenrad (18),
- einen mit dem Sonnenrad (18) und einem innenverzahnten Hohlrad (22) in Eingriff stehenden Planetenradsatz, dessen Planetenräder (19) an einem mit den umlaufenden Planetenrädern (19) rotierenden Planetenradträger (21) drehbar gelagert sind, wobei der Planetenradträger (21) zumindest auf einer Längsaxialseite am Getriebegehäuse (5) über ein Kugellager (31) radial abgestützt ist,
- eine Abtriebswelle (25) am Planetenradträger (21), und
- einen separaten Lagersitzring (32) zwischen Kugellager (31) und Getriebegehäuse (5),
**dadurch gekennzeichnet, dass** der Lagersitzring (32) mit seinem Außendurchmesser auf dem Kopfkreis der Innenverzahnung (38) am Getriebegehäuse (5) für das Hohlrad (22) eingesetzt ist.

2. Planetengetriebe nach Anspruch 1, **dadurch gekennzeichnet, dass** der Lagersitzring (32) aus einem Kunststoffmaterial besteht.

3. Planetengetriebe nach einem der vorgenannten Ansprüche, **dadurch gekennzeichnet, dass** der Innendurchmesser (Di) des Lagersitzringes (32) einem Standard-Außendurchmesser (Da) für das Kugellager (31) entspricht.

4. Planetengetriebe nach einem der vorgenannten Ansprüche, **dadurch gekennzeichnet, dass** der Außenring (34) des Kugellagers (31) in eine in der Innenfläche des Lagersitzringes (32) umlaufende, flache Hinterschneidung (35) eingeschnappt ist.

5. Planetengetriebeanordnung mit mehreren Planetengetriebestufen (11, 17) nach einem der vorgenannten Ansprüche, **gekennzeichnet durch** ein einteiliges, alle Getriebestufen (11, 17) aufnehmendes Getriebegehäuse (5), dessen Innenverzahnung (38) zur Aufnahme des Lagersitzringes (32) für das Kugellager (31) des Planetenradträgers (21) sowie als Hohlrad (22) für den Eingriff der Planetenräder (19) der Planetengetriebestufen (11, 17) ausgelegt ist.

## Claims

1. Planetary gear, in particular a planetary gear step in a multiple step planetary gear assembly, comprising
- an externally toothed sun gear (18) functioning as a drive shaft,
- a planetary gear set engaging with the sun gear (18) and an internally toothed ring gear (22), the planetary wheels (19) of which are rotatably mounted on a planetary wheel carrier (21) rotating with the rotating planetary wheels (19), wherein the planetary wheel carrier (21) is supported radially at least on one longitudinal axial side on the gear housing (5) by means of a ball bearing (31),
- a driven shaft (25) on the planetary wheel carrier (21), and
- a separate bearing seat ring (32) between the ball bearing (31) and gear housing (5),
**characterised in that** the bearing seat ring (32) is inserted with its external diameter on the head circle of the internal toothing (38) on the gear housing (5) for the ring gear (22).

2. Planetary gear according to claim 1, **characterised in that** the bearing seat ring (32) is made of plastic material.

3. Planetary gear according to any one of the preceding claims, **characterised in that** the internal diameter (Di) of the bearing seat ring (32) corresponds to a standard external diameter (Da) for the ball bearing (31).

4. Planetary gear according to any one of the preceding claims, **characterised in that** the external ring (34) of the ball bearing (31) is snapped into a flat undercut (35) rotating in the inner surface of the bearing seat ring (32).

5. Planetary gear arrangement comprising a plurality of planetary gear steps (11, 17) according to one of the preceding claims, **characterised by** a one piece gear housing (5) mounting all of the gear steps (11, 17), the internal toothing (38) of which is configured for mounting the bearing seat ring (32) for the ball bearing (31) of the planetary wheel carrier (21) and as a ring gear (22) for the engagement of the planetary wheels (19) of the planetary gear steps (11, 17).

## Revendications

1. Engrenage planétaire, notamment étage d'engrenage planétaire dans un agencement d'engrenage planétaire à plusieurs étages, comprenant
- une roue planétaire (18) munie d'une denture à l'extérieur fonctionnant en tant qu'arbre d'entraînement,
- un essieu planétaire étant en relation avec la roue planétaire (18) et une roue creuse munie d'une denture interne (22) dont les roues planétaires (19) sont logées, pouvant tourner, dans un support de roue planétaire (21) rotatif avec les roues planétaires le parcourant (19), le support de roues planétaires (21) étant appuyé radialement au moins sur son côté axial longitudinal sur le carter de l'engrenage (5) par l'intermédiaire d'un roulement à billes (31),
- un arbre d'entraînement (25) sur le support de roue planétaire (21) et
- un anneau à siège de roulement (32) séparé entre le roulement à billes (31) et le carter de l'engrenage (5),
**caractérisé en ce que** l'anneau de siège du roulement (32) est inséré à l'aide de son diamètre extérieur sur le cercle frontal de la denture interne (38) sur le carter d'engrenage (5) pour la roue creuse (22).

2. Engrenage planétaire selon la revendication 1 **caractérisé en ce que** l'anneau de siège du roulement (32) est constitué d'un matériau en substance synthétique.

3. Engrenage planétaire selon l'une des revendications précitées **caractérisé en ce que** le diamètre intérieur (Di) de l'anneau de siège de roulement (32) correspond à un diamètre standard extérieur (Da) pour le roulement à billes (31).

4. Engrenage planétaire selon l'une des revendications précitées **caractérisé en ce que** l'anneau extérieur (34) du roulement à billes (31) est pris dans une encoche (35) plane, faisant le tour dans la surface intérieure de l'anneau de siège du roulement (32).

5. Agencement d'engrenages planétaires comprenant plusieurs étages d'engrenages planétaires (11, 17) selon l'une des revendications précitées **caractérisé par** un carter d'engrenages unique contenant tous les étages d'engrenages (11, 17), carter dont la denture intérieure (38) est conçue pour la réception de l'anneau de siège de roulement (32) pour le roulement à billes (31) du support de roue planétaire (21) ainsi qu'en tant que roue creuse (22) pour l'engrenage des roues planétaires (19) des étages d'engrenages planétaires (11, 17).
